# EUROPÄISCHE PATENTSCHRIFT

(11) **EP 0 462 532 B1**
(45) Veröffentlichungstag und Bekanntmachung des Hinweises auf die Patenterteilung: **18.01.1995**
(21) Anmeldenummer: 91109862.2
(22) Anmeldetag: 16.06.1991
(51) Int. Cl.: A23L 3/00, B65D 81/34

(54) **Kühl-Fertiggerichte mit hoher Lagerfähigkeit**
Chilled, ready to serve dishes with long shelflife
Plats réfrigérés et/ou prêts à servir à longe durée de conservation

(30) Priorität: 19.06.1990 DE 4019470
(43) Veröffentlichungstag der Anmeldung: 27.12.1991
(73) Patentinhaber: bekina Lebensmittel GmbH, 14547 Beelitz (DE)
(72) Erfinder: Koch, Winfried, W-5160 Düren (DE); Klein, Robert, W-5000 Köln 30 (DE)
(74) Vertreter: Eggert, Hans-Gunther, Dr.

(56) Entgegenhaltungen:
- EP-A- 0 284 137
- CH-A- 425 616
- DE-A- 3 919 120
- US-A- 3 889 009
- LEHRBUCH DER LEBENSMITTEL- CHEMIE, 1961, SPRINGER-VERLAG,Berlin, Göttingen,
- Heidelberg J. SCHORM LLER "Lehrbuch der Lebensmittelchemie" Seiten 216-219
- Lueger, Lexikon der Technik, Rowohlt Verlag, Bd.8 (1976), S.296

## Beschreibung

Die Erfindung betrifft Fertig- bzw. Kühl-Fertiggerichte mit Teller bzw. Schale und ein Verfahren zu ihrer Herstellung.

Die EP-A-284 137 betrifft eine Verpackung, enthaltend einen Container, der Wenigstens zum Teil an seiner oberen Seite geöffnet ist, auf dem ein eßbares Material plaziert ist, welches sich auf dem Behälter ausbreitet, sowie eine Abdeckung, die sich auf dem Container befindet und den Container abdichtet, dadurch gekennzeichnet, daß die Abdeckung im wesentlichen aus einem nicht selbst unterhaltenden Material besteht, und die Dimensionen der Abdeckung so gewählt sind, daß es hiervon abgenommen werden kann, ohne das eßbare Material zu deformieren, wobei die Befestigung der Abdeckung am Container intakt bleibt. Die Abdeckung besteht aus einer nicht selbst unterhaltenden Folie, wie Aluminiumfolie, Plastikfolie, PET-Folie oder ähnlichem.

Die US-A-3 889 009 betrifft ein Verfahren und eine Vorrichtung zur Sterilisierung von Nahrungsmitteln in einem kontinuierlichen Prozeß mit Hilfe von elektromagnetischer Strahlung. Hierdurch kann das Produkt an den Verbraucher entweder vollständig gekocht oder nur teilweise gekocht abgegeben werden, während die Nahrungsmittel vollständig sterilisiert worden sind. Der Nahrungsmittelbehälter kann Glas oder ein geeignetes Plastikbehältnis sein, welches für Mikrowellenenergie und andere elektromagnetische Energien durchlässig ist. Vorzugsweise handelt es sich bei diesem Behältnis um einen Beutel oder Sack mit versiegelten Enden, der beispielsweise aus Polyethylen oder Nylon besteht.

Die CH-B-425 616 betrifft eine Packung für tiefgekühlte Speisen, bei welcher die Speisen in einem mit einer Abdeckung versehenen Behälter angeordnet sind, das dadurch gekennzeichnet ist, daß die Abdeckung, welche eine einzige Schutzhülle der Speisen bildet, eine straff passende Umhüllung aus einer einzigen Schicht aus dünner, transparenter, biaxial orientierter, unter Wärmeeinwirkung schrumpffähiger Polypropylenfolie besteht, wobei das Ober- und Unterteil der Hülle am Umfang des Behälters mindestens am überwiegenden Teil mit einer Versiegelung versehen ist.

Die deutsche Offenlegungsschrift 39 19 120 beansprucht dicht verschließbare, schüsselartige Behälter oder Teller zum Transport, zur Aufbewahrung und zur späteren Erwärmung zubereiteter Speisen, insbesondere für Suppen und Gerichte mit Soßen oder dergleichen, der dadurch gekennzeichnet ist, daß der Rand der Schüssel oder des Tellers mit einem siegelbaren, zum Boden parallelen oder zu diesem kegelförmigen Randteil ausgebildet ist, und eine Folie oder ein dünnwandiger Deckel mit dem Randteil der Schüssel verschweißt, verklebt oder dicht verbunden ist.

Besonders schwierig gestaltet sich die Zubereitung von Gerichten aus Nahrungsmittelbestandteilen unterschiedlicher Konsistenz. Bekannt ist eine individuelle thermische Behandlung zur Haltbarmachung von einzelnen Komponenten eines Gerichts, bei der stückige Bestandteile eines Suppengerichts mit einer Kantenlänge von 5 bis 20 mm in einem Batch-Verfahren durch direkte Dampfbeheizung und die Flüssigphase (Trägerflüssigkeit) unter thermisch schonenderen Bedingungen kontinuierlich in einem Parallelstrom sterilisiert werden und anschließend beide Nahrungsmittelbestandteile unter aseptischen Bedingungen zusammengeführt, vermischt und abgefüllt werden, (Bake, Plett, Lebensmitteltechnik 11 (1989), 646-655). Nachteilig bei diesem Verfahren ist, daß es nicht für Tellergerichte geeignet ist, deren Komponenten stark unterschiedliche Konsistenzen haben, da die Komponenten zur Erhaltung der geschmacklichen, optischen und mechanischen Stabilität einerseits eine individuelle thermische Haltbarmachung und andererseits eine Positionierung der Komponenten auf einem Teller bzw. einer Schale mit anschließender aseptischer Folienabdeckung erfordern. Zusätzlich ergibt sich das Problem, daß Schale oder Teller durch die Direktbedampfung eine hohe Oberflächenfeuchtigkeit aufweisen, was die mechanische Haftung der Folie auf diesen Behältnissen beeinträchtigt.

Der Erfindung liegt demgemäß die Aufgabe zugrunde, die oben genannten Nachteile zu vermeiden und ein Fertiggericht bzw. Kühl-Fertiggericht mit guten geschmacklichen Eigenschaften und langer Haltbarkeit bereitzustellen.

Das erfindungsgemäße Fertig- bzw. Kühlfertiggericht enthält auf einem Servierbehältnis, Teller oder Schale, aus einem auf 220°C erhitzbaren Material ein darauf angeordnetes pasteurisiertes bzw. sterilisiertes Gericht.

Die durch eine Skin-Folie im wesentlichen voneinander getrennten Nahrungsmittel können wenigstens teilweise drapiert sein. Diese gestalterische Anordnung der Nahrungsmittel geht beim Entfernen der Skin-Folie nicht verloren, da sich diese beim Erwärmen des Gerichts vom Servierbehältnis abhebt. Die Skin-Folie kann um den Tellerrand gekrempelt sein, als besonders vorteilhaft hat sich jedoch eine Ausbildungsform erwiesen, nach der die das Gericht abdeckende Folie mit einer unter dem Teller angeordneten Folie außerhalb des Tellers verschweißt ist. Nach dem Erwärmen lassen sich beide Folien in einfacher Weise an der Schweißnaht trennen.

Die erfindungsgemäßen Gerichte können durch ein Verfahren erhalten werden, in dem man die Nahrungsmittel nach herkömmlicher, nahezu garfertiger Zubereitung maschinell oder von Hand auf dem Servierbehältnis positioniert, eine Bedampfung zur Keimverringerung durchführt, parallel dazu gegebenenfalls eine Soße sterilisiert, das Gericht einer Schnellkühlung unterzieht und gemeinsam mit dem Servierbehältnis unter Einsatz einer Skin-Folie versiegelt.

Dabei wird von Nahrungsmitteln wie Fleisch, Fisch, Sättigungsbeilage, Gemüse, nachfolgend als feste Nahrungsmittel bezeichnet, und Soße ausgegangen, die nach traditionellen Rezepturen durch konventionelle Zubereitungsverfahren abfüllfähig aufbereitet werden. Allgemeine Voraussetzungen für die Bereitstellung des erfindungsgemäßen Fertiggerichts bestehen darin, daß die Nahrungsmittel schnell und schonend, d.h. unter Erhaltung des Nährwerts, zubereitet sowie unter Beachtung aller denkbaren hygienischen Umstände geliefert werden.

Die Nahrungsmittel dürfen jedoch nicht eßfertig, sondern nur nahezu eßfertig zubereitet sein.

Fleisch oder Fisch werden von Hand, andere Nahrungsmittel vorzugsweise maschinell auf ein Servierbehältnis, einen Teller bzw. eine Schale positioniert. Dieses Servierbehältnis besteht aus einem geschmacksneutralen, auf 220°C erhitzbaren Material.

Zur Verringerung der Anzahl mikrobieller Keime werden die festen Nahrungsmittel auf dem Servierbehältnis einer Direktbedampfung mit gesättigtem Wasserdampf bei Atmosphärendruck, vorzugsweise in einem Dampftunnel unterzogen. Die Bedampfung erfolgt vorzugsweise 5 bis 25 min lang bei einer Tempertaur von 90°C bis 100°C und in besonders bevorzugter Weise 10 bis 15 min bei 100°C. Vorzugsweise wird statt gesättigtem Wasserdampf ein schwach überhitzter wasserdampf, vorzugsweise bei einer Temperatur von 101°C bis 120°C verwendet. Hierdurch werden einerseits eine definierte Restverdampfung von freier Oberflächenfeuchte auf dem Gericht und dem Servierbehältnis erreicht und andererseits eine Tropfenbildung durch Kondensation an der Dampftunnelwand vermieden.

Soll jedoch durch Ausdünstung bei erhöhter Temperatur eine krosse Haut bei gegrilltem Fleisch oder Kartoffelchips erreicht werden, wird vorzugsweise der hintere Dampftunnelbereich oder der gesamte Dampftunnel bei Atmosphärendruck mit überhitztem Dampf einer Temperatur von 100°C bis 140°C, vorzugsweise 103°C bis 130°C betrieben. Der überhitzte Dampf wird entweder durch Drosselung von Wassersattdampf von erhöhtem Druck auf Atmosphärendruck (beispielsweise entsteht aus 1,6 bar Sattdampf überhitzter Dampf bei 110°C und 1 bar) oder durch Erhitzung von atmosphärischem Wassersattdampf mittels Strahlungs- oder Konvektionswärme erzeugt.

Bei Fleischgerichten mit unvermeidlichem fetthaltigem Saftaustritt, z.B. geschnetzeltem Fleisch, reichen die oben genannten Maßnahmen zur Vermeidung von freier Flüssigkeit auf dem Servierbehältnis u.U. nicht aus. Um eine Geschmacksvermischung vom Fleisch auf die anderen Komponenten zu vermeiden, wird deshalb bei Fleischgerichten, bei welchen trotz Vorbehandlung nicht ein fetthaltiger Saftaustritt verhindert werden kann, die Fleischkomponente getrennt von dem Servierbehältnis durch die Aufheizstufe und den Dampftunnel geleitet und anschließend auf dem Servierbehältnis positioniert.

Gerichte, die ohne jegliche Kühlung über ein Jahr haltbar sind, werden vorzugsweise 10 bis 30 min einer Bedampfung unter erhöhtem Druck mit gesättigtem Dampf einer Temperatur von 120°C bis 150°C, vorzugsweise etwa 20 min bei 130°C bis 135°C unterzogen. Die Dampftemperatur von 120°C bis 150°C wird entweder durch Wassersattdampf bei erhöhtem Druck oder durch überhitzten Wasserdampf erzeugt. Bei Anwendung von Sattdampf unter erhöhtem Druck ist am Ein- und Austritt des Dampftunnels eine aseptische Druckschleuse erforderlich.

Soßen werden der zuvor beschriebenen Behandlung nicht unterworfen. Die Verringerung der mikrobiellen Keimzahl wird bei einer Soße in einem geschlossenen Wärmeaustauschersystem erreicht. Zuvor werden jedoch in einem vorgeschalteten Mischbehälter die einzelnen Ingredienzien der Soße vermischt. Die Hitzebehandlung erfolgt bei 100°C bis 130°C vorzugsweise nach Art einer Wasserdampfsterilisation.

Neben der Keimverringerung hat diese Sterilisationsstufe die Aufgabe, die Soße zu reduzieren, also deren Viskosität zu erhöhen. Anschließend wird die Soße schnell abgekühlt und in nahezu pastöser Form zu den übrigen, noch heißen Nahrungsmitteln auf dem Servierbehältnis gegeben.

Die Kühlung kann nach verschiedenen dem Fachmann bekannten Arten erfolgen. Wesentlich ist jedoch, daß die Soße in etwa 2 Minuten etwa auf 10°C gekühlt wird, da in einem Temperaturbereich von 10°C bis 60°C gegenüber niedrigen Temperaturbereichen ein gesteigertes mikrobielles Wachstum vorliegt.

Die Soße wird unter aseptischen Bedingungen auf den übrigen Nahrungsmitteln bzw. dem Servierbehältnis positioniert. Da die Soße nahezu pastös auf das Fleisch kommt, wird sie sofort von der Strahlungshitze des Tellers angeschmolzen, was ihr die Adhäsion zum Teller verleiht.

Zur Entfernung von Kondensationswasser, das sich noch auf dem Servierbehältnis befinden kann, wird der Teller bzw. die Schale durch einen aseptischen bzw. pasteurisierten Tunnel geführt, in dem der Rand des Behältnisses durch gezielt eingedüstes, steriles Gas, vorzugsweise Stickstoff, getrocknet wird. Der Tellerrand wird von unten oder der Seite angeblasen, um eine gleichzeitige Austrocknung des Gerichts zu vermeiden.

Gemäß einer weiteren bevorzugten Ausführungsform wird Restwasser am Servierbehältnis dadurch entfernt, daß im hinteren Teil des Dampftunnels eine Direktbedampfung mit einem Wasserdampf/Stickstoff- oder Wasserdampf/Luft-Gemisch erfolgt, welches durch Konvektions- oder Strahlungswärme auf 105°C bis 200°C und in besonders bevorzugter Weise auf 110°C bis 130°C erwärmt wird.

Als besonders vorteilhaft hat sich eine sogenannte feuchtneutrale Aufheizung der Nahrungsmittel von etwa 20°C auf etwa 78°C bis 90°C erwiesen, durch die Teller und Gericht vor dem Pasteurisieren oder Sterilisieren bei weitgehender Vermeidung von Kondensation und Ausdünstung aufgeheizt werden. Dabei läßt man Heißluft oder ein heißes Inertgas wie z.B. Stickstoff oder Kohlendioxid einer Temperatur von etwa 100°C bis 130°C, insbesondere etwa 115°C, mit einer definierten Luftfeuchtigkeit auf das Nahrungsgut einwirken. Die Aufheizung kann durch erwärmende Bestrahlung des Gerichts, z.B. mit Mikrowellen oder Infrarotstrahlen unterstützt werden. Die Luftfeuchtigkeit wird so gewählt, daß der Wasserdampfpartialdruck in dem Heißgas dem Sättigungspartialdruck der Kondensatfeuchte bei der Temperatur entspricht, auf die das Gut aufgeheizt werden soll.

Bei der Einwirkung des feuchten Heißgases erfolgt zunächst eine Kondensation von Feuchtigkeit auf dem Nahrungsmittelgut sowie dem Behältnis. Dies hat den großen Vorteil, daß eine bessere Wärmeübertragung und dadurch ein schnelles Schließen der oberflächlichen Poren des Lebensmittels gewährleistet ist, so daß ein Ausdünsten bzw. Austrocknen des Guts vermieden wird.

Hat das Nahrungsmittel die gewünschte Temperatur von etwa 78°C bis 90°C erreicht, kann keine Kondensation mehr auftreten, weil der Wasserdampfdruck des Heißgases gleich dem Sättigungspartialdruck der Kondensatfeuchte ist. Es findet nun eine Wärmeübertragung durch Konvektion, vorzugsweise durch Heißluft-Zirkulation, statt, die zur Verdunstung der zuvor angefallenen Kondensatfeuchte führt.

Auf diese Weise wird ein neutral aufgeheiztes Produkt in die Direktbedampfungsstufe eingeführt und dort vorzugsweise einer Behandlung mit überhitztem Wasserdampf ausgesetzt. Dessen Strömung kann schwachturbulent oder nahezu turbulenzfrei (laminar-flow) sein. Bei turbulenter Strömung ist zwar die konvektive Wärmeübertragung verbessert, jedoch ist wegen erhöhter Rekontaminationsgefahr ein absolut dichter Strömungskanal erforderlich. Bei laminar-flow ist der konvektive Wärmeübergang zwar geringer, die mikrobiologische Rekontaminationsgefahr jedoch stark reduziert.

In einer weiteren bevorzugten Varianten wird in der sog. feuchtneutralen Aufheizstufe nicht nur die Aufheizung des Gerichts, sondern auch dessen Pasteurisation durchgeführt. Hierdurch entfällt der Dampftunnel. Bei Verwendung von einem Heißgasgemisch aus Wasserdampf und sterilem Stickstoff oder Kohlendioxid kommt das Produkt nicht mehr mit Sauerstoff in Kontakt. Besonders vorteilhaft ist dieser Prozeß für das Pasteurisieren von Teigwaren, Pasten und Gemüsebestandteilen. Versuche haben gezeigt, daß die während der feuchtneutralen Aufheizung gebildeten Kondensatfeuchte (bis Erreichen der Wasserdampfpartialdrucktemperatur) in etwa der Feuchtigkeitsaufnahme von Nudel- und Gemüsekomponenten während der Restgarung bei der Pasteurisation entspricht. Deshalb wird diese Kondensationsfeuchte nicht oder nur teilweise durch konvektive Wärmeübertragung verdunstet. Hierzu wird ein feuchtes Heißdampfgemisch mit einer Temperatur von 70 bis 98°C und einem Wasserdampfsättigungsdruck gleicher Temperatur oder geringfügig niedriger, bevorzugt bei ca. 98°C und einem Wasserdampfsättigungsdruck bei ca. 95°C verwendet.

Das Servierbehältnis mit den darauf positionierten Nahrungsmitteln kann nun einer Kühlung unterzogen werden, wobei dem Fachmann bekannte Kühlverfahren eingesetzt werden können. Entscheidend auch bei diesem Kühlschritt ist, daß die mikrobielle Stabilität des Fertiggerichts von der Schnelligkeit des Kühlvorgangs abhängt. Der Fachmann wird deshalb Kühlverfahren wählen, mit denen das Produkt in einer ersten Kühlstufe in möglichst kurzer Zeit auf Kerntemperaturen von 10°C und in einer zweiten Stufe auf eine Kerntemperatur von 2°C bis 3°C gekühlt werden kann. Vorzugsweise wird zur Kühlung des Fertiggerichts Stickstoff mit einer Arbeitstemperatur von bis zu -30°C eingesetzt (Schnellkühlung).

Es wird jedoch bevorzugt, das Fertiggericht nach der Direktbedampfung in die Siegelstation zu führen, wobei zwischen Dampftunnel und Siegelstation ein Atmosphärenwechsel von Dampf zu Inertgas, beispielsweise Stickstoff oder Kohlendioxid, stattfindet. Das Inertgas ist soweit mit Wasserdampf - vorzugsweise aus dem Dampftunnel - angereichert, daß zwischen Dampftunnel und Siegelstation einerseits eine nur geringe Ausdünstung und Abkühlung des Gerichts auftritt und andererseits zwecks Vermeidung von Tropfen an der Tunnelwand eine Kondensation vermieden wird. Aus mikrobiologischen Gründen beträgt die Temperatur des feuchten Inertgasstromes 65°C-100°C. Zur Aufrechterhaltung der mikrobiologischen Stabilität ist der aseptische Inertgasstrom frei von Sauerstoff und strömt im laminar-flow. Das Fertiggericht wird mit einer gasdichten Skin-Folie überzogen. Die Versiegelung kann nach verschiedenen, dem Fachmann bekannten Verfahren erfolgen, vorzugsweise wird die Skin-Folie aber im Siegelwerkzeug in einen sogenannten Dom gezogen, wo sie mittels Hitzebestrahlung bei einer Temperatur von etwa 220°C nahezu plastifiziert wird. Die mikrobiologische Stabilität läßt sich erhöhen, wenn das versiegelte Gericht für einige Zeit auf eine Temperatur von oberhalb etwa 65°C gehalten wird. Anschließend kann eine normale Kühlung erfolgen.

In einer weiteren bevorzugten Prozeßvarianten wird zwischen Dampftunnel und Siegelstation eine Wasserdampfatmosphäre oder eine feuchte Inertgasatmosphäre bei geringem Überdruck und bei schwachem Turbulentflow verwendet. Der geringe Überdruck wird durch strömungstechnische Reihenschaltung von Aufheizstufe (mit Heißluftzirkulation) und Dampftunnel sowie Abkapselung der Siegelstation erzeugt. Vorteilhaft ist hierbei, daß der kostenaufwendige laminar-flow im Dampftunnel und Siegelbereich vermieden wird und mögliche Undichtigkeiten der Apparate nicht zu einem Eindringen kontaminierter Umgebungsluft führen. Die Skinfolie besitzt eine deutlich höhere Erweichungstemperatur als die Atmosphäre zwischen Dampftunnel und Siegelstation, um eine thermische Rückverformung der Siegelfolie auszuschließen.

Bei der Siegelung wird das Produkt unter Vakuum unter die Folie gehoben, wobei sich die Skin-Folie eng um die einzelnen Nahrungsmittelkomponenten legt, diese also vorzugsweise voneinander getrennt sind, so daS Umluft weitestgehend ausgeschlossen ist.

Eine weitere Keimreduzierung tritt während des Siegelvorgangs dadurch auf, daß vor der Siegelung überhitzer Wasserdampf mit einer Temperatur von ca. 180°C in den Raum zwischen Tellergericht und Siegelfolie geleitet wird.

Für den Fall, daß für das pasteurisierte Produkt noch einige Keime, z.B. durch geringe Undichtigkeiten zwischen Dampftunnel und Siegelstation auf das Gericht oder das Servierbehältnis gelangen, wird nach der Siegelung eine Kurzzeit-Pasteurisierung durchgeführt. In bevorzugter Weise wird als Aufheizmedium ein heißes Inertgas-Wasserdampfgemisch mit einer Temperatur von ca. 95°C, wobei der Wasserdampfsättigungsdruck ebenfalls 95°C ist, verwendet. Hierdurch wird erreicht, daß einerseits die Grenzschicht des Produktes sowie das Servierbehältnis in kurzer Zeit die erforderliche Temperatur von 70°C bis 95°C, bevorzugt 90°C für 2 bis 5 Minuten, zur Abtötung der vegetativen Keime annimmt, andererseits die Temperatur von 100°C unterschritten wird, so daß sich nicht die Siegelfolie durch den Verdampfungsdruck der Flüssigkeit des Gutes von dem Servierbehältnis abhebt.

Die durch die Erfindung erreichten Vorteile liegen zunächst einmal in der für Kühl-Fertiggerichte außergewöhnlichen Lagerfähigkeit, ohne daß Einbußen hinsichtlich Geschmack und Nährwert gegenüber den nach herkömmlichen Verfahren frisch zubereiteten Gerichten hingenommen werden müssen. Kühl-Fertiggerichte sind länger als 30 Tage, vorzugsweise länger als 38 Tage und die durch Sterilisation behandelten Fertiggerichte länger als ein Jahr lagerfähig. Durch den Skineffekt wird das mit Stickstoff behandelte und von Umluft und überschüssigem Stickstoff befreite Produkt luftdicht verschlossen, wodurch die mikrobiologische Stabilität erhalten bleibt. Durch diese Art der Versiegelung sind auch die einzelnen Nahrungsmittelkomponenten voneinander getrennt, so daß eine Geschmacksveränderung beispielsweise im Sinne einer gegenseitigen Angleichung vermieden wird.

Die Nahrungsmittelkomponenten behalten damit ihren individuellen Geschmack, sofern die Kühlkette nach der erfindungsgemäßen Behandlung nicht unterbrochen wird. Wird gemäß einer bevorzugten Ausführungsform zur Versiegelung eine durchsichtige Skin-Folie eingesetzt, kann dem Endverbraucher das geschmacklich und sensorisch überdurchschnittliche Produkt auch noch in einer optisch ansprechenden, den Appetit anregenden Weise angeboten werden. Schließlich besteht ein weiterer Vorteil darin, daß sich die Skin-Folie nach der Wiedererwärmung des Fertiggerichts in der Mikrowelle oder im Backofen von dem Gericht abhebt, so daß eine einfache und saubere Entfernung der Folie gewährleistet ist.

Es hat sich gezeigt, daß alle Arten von Fertiggerichten, so auch Pizza und Pasta, nach dem erfindungsgemäßen Verfahren unter beträchtlicher Verringerung der Keimzahl zubereitet werden können.

Die vorliegende Erfindung betrifft auch ein Verfahren zur Herstellung von Fertig- bzw. Kühlfertiggerichten, dadurch gekennzeichnet,
daß man nahezu garfertigt zubereitete Nahrungsmittel mit heißer Luft oder heißem Inertgas einer Temperatur von 100°C bis 130°C aufheizt, deren Feuchte so gewählt ist, daß ihr Wasserdampfpartialdruck dem Sättigungspartialdruck der Kondensatfeuchte bei der gewünschten Temperatur der Nahrungsmittel im Bereich von 78°C bis 90°C entspricht,
mit überhitztem Wasserdampf einer Temperatur von 103°C bis 200°C behandelt,
mit einem Inertgas unter 80°C kühlt und
mit einer Skin-Folie versiegelt, als auch ein Verfahren zur Herstellung von Fertig- bzw. Kühlfertiggerichten, dadurch gekennzeichnet, daß nahezu garfertig zubereitete Nahrungsmittel, insbesondere Teigwaren, Pasten, Pizzas und Gemüsekomponenten ohne Direktbedampfung nach dem Prinzip der sog. feuchtneutralen Aufheizung erwärmt und pasteurisiert werden, wobei die Temperatur der feuchten Inertgasatmosphäre 70°C bis 98°C, vorzugsweise ca. 95°C, beträgt und der Wasserdampfsättigungsdruck bei jeweils gleicher Temperatur oder etwas niedriger gewählt wird.

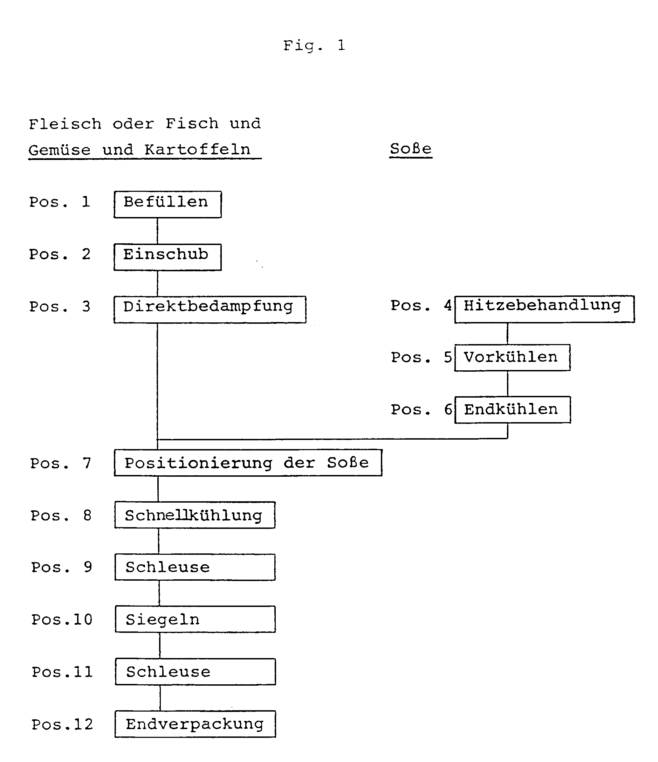

Im folgenden wird die Erfindung nach drei Ausführungsformen anhand der Zeichnungen näher erläutert. Es zeigt
Figur 1 ein Fließdiagramm der Herstellung der erfindungsgemäßen Kühl-Fertiggerichte unter Einsatz der Pasteurisation
Figur 2 ein Fließdiagramm der Herstellung der erfindungsgemäßen Fertiggerichte unter Einsatz der Sterilisation
Figur 3 ein Fließdiagramm für den Fall, daß stückige Komponenten unterschiedlich thermisch haltbar gemacht werden.

Nach der nahezu eßfertigen Zubereitung von Fleisch, Sättigungsbeilage und Gemüse nach traditionellen Rezepturen in Kochgeräten auf einem hohen hygienischen Niveau und in möglichst klimatisierten, mit keimfreier Luft versorgten Räumen, müssen diese Produkte auf dem kürzesten Weg über ein geschlossenes Rohrsystem zu den einzelnen Füllaggregaten geführt werden. Von hier aus werden die Komponenten mittels Spezialabfüllvorrichtungen (Position 1) auf einen Kunststoffteller, der keine Unterteilungsfächer für die einzelnen Produkte enthält, abgefüllt. Fleisch oder Fischbestandteile wie beispielsweise Koteletts und Schnitzel werden jedoch von Hand auf den Teller gegeben. Die Füllaggregate müssen aus inerten Werkstoffen bestehen und so hygienisch wie möglich arbeiten. Bei der Dosierung darf das Produkt weder gequetscht, gepreßt oder sonstwie mechanisch beeinträchtigt werden.

Von den Füllaggregaten wandert das Gericht über eine Kettenführung in die Position 2, wo der Teller für die nachfolgenden Verfahrensstufen positioniert wird. Bei Position 3, wo der sogenannte keimfreie Bereich beginnt, läuft das Produkt durch eine Direktbedampfung in einem Dampftunnel bei Atmosphärendruck und einer Temperatur von etwa 100°C. Das Gericht wird solange mit Wasserdampf bedampft, bis eine Kerntemperatur von etwa 90°C erreicht und 10 min gehalten wurde. Zwecks Vermeidung von überschüssiger Kondensatfeuchte auf dem Gericht und dem Servierbehältnis kann im Eintrittsbereich des Dampftunnels (Pos. 3) eine Aufheizung mit feuchter Umluftzirkulation bei einer Temperatur von 115°C und einem Wasserdampfsättigungsdruck von 78°C integriert sein.

Die thermische Behandlung gegrillter oder frittierter Komponenten in Position 3 erfolgt mittels überhitztem Dampf bei einer Temperatur von 110°C. Dieser überhitzte Dampf wird durch adiabate Drosselung von Sattdampf mit einem Druck von 1,6 bar auf Atmosphärendruck erzeugt.

Sollen die Nahrungskomponenten bei der Direktbedampfung nur eine sehr geringe Ausdünstung erfahren, wird im hinteren Teil des Dampftunnels schwach überhitzter Dampf einer Temperatur von 103°C bis 108°C eingesetzt, damit das Serviergefäß mit trockenem Rand den Tunnel verläßt. Im vorderen Dampftunnelbereich wird jedoch Sattdampf verwendet, um den sehr guten Wärmeübertragungseigenschaften von kondensierendem Dampf bei der Erwärmung des Gerichts und dessen Ausdünstung entgegenzuwirken.

In einem Mischbehälter werden die Soßenbestandteile miteinander vermischt und anschließend über ein geschlossenes System zu einer Hitzebehandlungsstufe (Position 4), wo die Soße sterilisiert wird, transportiert. In dieser Behandlungsstufe wird die Soße soweit reduziert, daß sie eine gewisse Viskosität erhält. In der Position 5 erfolgt eine Vorkühlung der Soße auf eine Temperatur von etwa 8°C bis 12°C. Durch die Nachkühlung auf 2°C bis 4°C von Position 6 wird die richtige Konsistenz zur Positionierung der Soße erreicht. Die richtige Konsistenz liegt dann vor, wenn die Soße einen nahezu pastösen Charakter hat und, ohne zu verlaufen, positioniert werden kann. Die Hitzebehandlung der Soße verläuft parallel zu der Direktbedampfung der übrigen Nahrungsbestandteile.

In der Position 7 werden die Nahrungsmittel aus den parallelen Prozeßströmen der Direktbedampfung und der Soßenbehandlung zusammengeführt, d.h. die Soße auf den Teller positioniert. Die nahezu pastöse Soße wird von der Strahlungshitze des Tellers angeschmolzen und erhält dadurch eine gute Adhäsion auf dem Teller.

In der Position 8 kann das Produkt einer Schnellkühlung mit Stickstoff einer Temperatur von -70°C bis -30°C unterzogen werden. Gekühlt wird solange, bis im Kern der Nahrungsmittel eine Temperatur von etwa 2°C bis 3°C und an deren Oberfläche eine Temperatur von etwa -1°C erreicht ist. Auch hier ist es wichtig, daß die Abkühlung auf etwa 10°C so schnell wie möglich erfolgt. Position 9 ist eine Schleuse zum Trocknen des Teller- bzw. Schalenrands durch seitliches Einblasen von Stickstoff.

In der Siegelstation (Position 10) wird das Produkt mit einer Skin-Folie bei einer Temperatur von 65°C bis 95°C versiegelt. Die Skin-Folie wird dazu im Siegelwerkzeug in einen sog. Dom gezogen, wo sie unter Einwirkung von Kontakthitze mit einer Temperatur von 220°C nahezu plastifiziert wird. Ist die Skin-Folie nahezu plastifiziert, um mehr als das Dreifache ausgedehnt und ausgeformt, wird das Produkt durch einen Hubtisch in den Dom hineingeschoben und durch Abschaltung der Hitze legt sich die Folie, ähnlich einer Schrumpffolie eng um die Nahrungsmittelkomponenten und ist dann um den Teller- bzw. Schalenrand, nicht jedoch um dessen Boden gekrempelt.

Während des ganzen Vorgangs wird in diesem Bereich ein Vakuum gezogen, so daß das Produkt von der Umluft befreit wird. Diese Versiegelung erfolgt nach dem Skin-Verfahren der Fa. Grees mit Maschinen der Fa. Cryovac. Das Produkt wandert nun über eine weitere Schleuse (Position 11) auf Position 12, wo es mit einer Kunststoff-Klarsichtfolie überzogen wird, die einerseits als Transportschutz und andererseits als Endverpackung dient.

Sämtliche Positionen 3 bis 11 sind unter aseptischen Bedingungen hermetisch miteinander verbunden, bzw. durch Tunnelleisten verknüpft, so daß ein Eindringen von Luft oder Verunreinigungen ausgeschlossen ist.

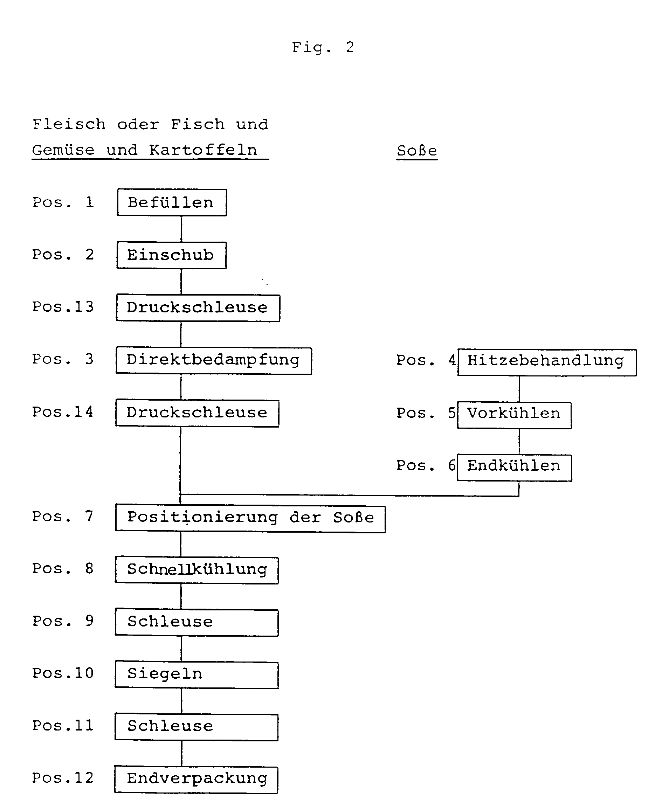

Bei der Herstellung von sterilen Fertigprodukten nach Figur 2 wird im Dampftunnel (Position 3) bei einem Druck von 2,7 bar und einer Sattdampftemperatur von 130°C (Kerntemperatur des Sterilguts etwa 120°C) eine Sterilisation ohne Ausdünstung der Nahrungsmittel erreicht. Hierzu sind am Ein- und Austritt des Dampftunnels die Druckschleusen Position 13 und Position 14 erforderlich.

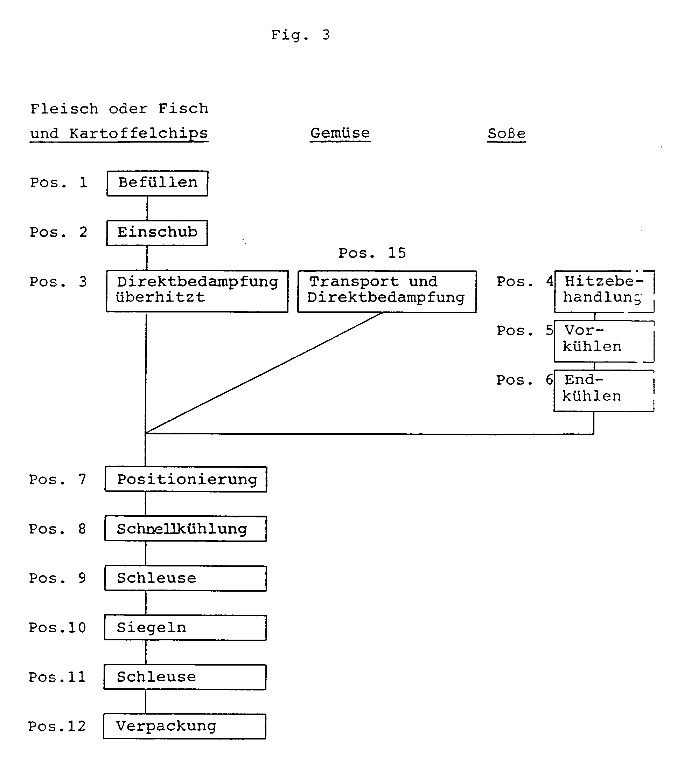

Sollen stückige Komponenten unterschiedlich thermisch haltbar gemacht, kann gemaß Figur 3 verfahren werden, indem gegrilltes Fleisch und frittierte Kartoffelchips auf einem Servierbehältnis in Position 3 mit überhitztem Dampf oder Luft/Dampf-Gemisch behandelt werden. In einem Parallelpfad wird Gemüse in einer dosierten Transportvorrichtung unter atmosphärischem Druck durch Direktbedampfung mit Sattdampf bei 100°C (Position 15) pasteurisiert und anschließend auf dem Servierbehältnis positioniert (Position 7). Diese Pasteurisation des Gemüses (Position 15) kann auch mit der Verfahrensvariante in Figur 2 verknüpft werden.

### Beispiel 1

Herstellung eines pasteurisierten Menu-Fertiggerichts aus
100 g Fleisch
100 g Reis
100 g Gemüse
wobei das Leergewicht des Tellers etwa 30 g beträgt.

### A Feuchtneutrale Aufheizung

Aus vorgewärmter Luft und Wasserdampf aus dem Dampftunnel wird Heißluft mit einer Temperatur von etwa 115°C bei einer Wassersattdampftemperatur von etwa 78°C hergestellt, die mit einer Strömungsgeschwindigkeit von 4 m/s im Aufheiztunnel zirkuliert. Nach 4 min wird eine Kerntemperatur im Fleisch von 76°C erreicht, wobei sich Kondensationsfeuchte in einer Menge von 3 g auf dem Fleisch bildet. Teilweises Verdunsten der Feuchtigkeit erfolgt dann bei einer Temperatur von 78°C, wobei der Garungsprozeß einsetzt. Die Gesamtdurchlaufzeit in der Stufe der feuchtneutralen Aufheizung beträgt 15 min.

### B Dampftunnel

Im Dampftunnel wird das Gericht mit überhitztem Dampf bei einer Temperatur von 110°C behandelt, der aus 1,6 bar Sattdampf durch Entspannung erhalten wurde. Diese Behandlung führt zur Restverdampfung der überschüssigen Kondensatfeuchte und weiteren Garung der Nahrungsmittel, wobei die Durchlaufzeit im Dampftunnel etwa 15 min bei quasi Laminar-Flow-Bedingungen beträgt.

### Beispiel 2

### Aufheizung und Pasteurisation in einer Prozeßstufe

Zirkulierendes sauerstofffreies Inertgas/Wasserdampfgemisch hat eine Temperatur T₁ von 98°C bei einer Wassersattdampftemperatur von T₂ von 95°C. Somit erfolgt eine Aufheizung auf die Temperatur von 95°C bei einer Kerntemperatur des Produktes von 90°C - 95°C. Die gebildete Kondensatfeuchte wird größtenteils vom Produkt aufgesogen (Quellfeuchte). Durch die Wahl der Temperaturen T₁ und T₂ sowie der Strömungsgeschwindigkeit im Tunnel wird die gewünschte Feuchte produktspezifisch eingestellt. Die Aufheizzeiten der Produkte hängen wesentlich von der geometrischen Gestalt und Größe sowie der stofflichen Eigenschaften der Nahrungskomponenten ab. Die Durchlaufzeiten betragen hier etwa 15 bis 25 min.

## Patentansprüche

1. Fertiggericht mit Teller bzw. Schale ohne Unterteilungsfächer aus einem auf 220°C erhitzbaren Material mit einem darauf angeordneten pasteurisierten bzw. sterilisierten Gericht, das mit einer Folie, welche sich der Form des eingeschlossenen Produkts anpaßt (Skin-Folie) luftdicht abgedeckt ist, dadurch gekennzeichnet, daß mehrere Komponenten durch die Skin-Folie im wesentlichen voneinander getrennt sind und dieses Fertiggericht vor dem Pasteurisieren bzw. Sterilisieren einer feuchtneutralen Aufheizung unterzogen wird.

2. Fertiggericht nach Anspruch 1, dadurch gekennzeichnet, daß wenigstens ein Teil der Komponenten drapiert oder montiert ist.

3. Fertiggericht nach Anspruch, 1 oder 2, dadurch gekennzeichnet, daß die Skin-Folie um den Rand des Tellers oder der Schale gekrempelt ist.

4. Fertiggericht nach Anspruch 1 oder 2, dadurch gekennzeichnet, daß die das Gericht abdeckende obere Folie mit einer unter dem Teller angeordneten Skin-Folie außerhalb des Tellers verschweißt ist.

5. Fertiggericht nach einem oder mehreren der Ansprüche 1 bis 4, dadurch gekennzeichnet, daß der Sauerstoffgehalt der in den Komponenten des Gerichts oder in den Zwischenräumen verbliebenen Luft vermindert ist.

6. Fertiggericht nach einem oder mehreren der Ansprüche 1 bis 5, dadurch gekennzeichnet, daß das Gericht länger als 30 Tage, vorzugsweise mehr als 38 Tage, bei einer Kühllagerung lagerfähig ist.

7. Fertiggericht nach einem oder mehreren der Ansprüche 1 bis 6, dadurch gekennzeichnet, daß die Skin-Folie von dem aufgewärmten, verzehrsfertigen Gericht abgehoben und von Hand ohne Hilfsmittel entfernbar ist.

8. Fertiggericht nach einem oder mehreren der Ansprüche 1 bis 7, dadurch gekennzeichnet, daß das aufgewärmte verzehrsfertige Gericht Geschmack, Geruch, Vitamingehalt und Nährwert des frisch gekochten Gerichts besitzt.

9. Verfahren zur Herstellung eines Fertig- bzw. Kühlfertiggerichts aus wenigstens zwei unterschiedlichen Nahrungsmittelkomponenten nach den Ansprüchen 1 bis 8, dadurch gekennzeichnet, daß man die Nahrungsmittel nach herkömmlicher, nahezu garfertiger Zubereitung maschinell oder von Hand auf dem Servierbehältnis positioniert, eine Bedampfung zur Keimverringerung durchführt, parallel dazu gegebenenfalls eine Soße sterilisiert und gemeinsam mit dem Servierbehältnis unter Einsatz einer oder mehrerer Skin- Folie(n) versiegelt.

10. Verfahren nach Anspruch 9, dadurch gekennzeichnet, daß die Direktbedampfung bei Atmosphärendruck 10 bis 15 min lang mit gesättigtem Dampf einer Temperatur von etwa 100°C erfolgt.

11. Verfahren nach Anspruch 9, dadurch gekennzeichnet, daß die Direktbedampfung unter Druck bei einer Sattdampftemperatur von 130°C bis 135°C 20 min lang erfolgt.

12. Verfahren nach einem der Ansprüche 9 bis 11, dadurch gekennzeichnet, daß zur Vermeidung von Feuchtigkeit auf dem Servierbehältnis das Gut am Ende der Direktbedampfung oder im gesamten Dampftunnel mit überhitztem Wasserdampf einer Temperatur von etwa 103°C bis 130°C behandelt wird.

13. Verfahren nach einem der Ansprüche 9 bis 12, dadurch gekennzeichnet, daß das Gut am Ende der Direktbedampfung mit einem Wasserdampf/Stickstoff-Gemisch oder Wasserdampf/Luft-Gemisch, welches durch Strahlungs- oder Konvektionswärme auf 110°C bis 200°C, vorzugsweise etwa 130°C erwärmt ist, behandelt wird.

14. Verfahren nach Anspruch 9, dadurch gekennzeichnet, daß man vor der Direktbedampfung die Nahrungsmittel mit feuchter Luft oder einem feuchten Inertgas auf eine Temperatur von etwa 78°C bis 90°C aufheizt.

15. Verfahren nach Anspruch 14, dadurch gekennzeichnet, daß die Heißluft oder das heiße Inertgas für die feuchte Aufheizung eine Temperatur von etwa 100°C bis 130°C, insbesondere etwa 115°C aufweist, wobei die Luftfeuchte so gewählt ist, daß der Wasserdampfpartialdruck in der Heißluft dem Sättigungspartialdruck der Kondensatfeuchte bei der Temperatur entspricht, auf die das Nahrungsmittel aufgeheizt werden soll.

16. Verfahren nach einem der Ansprüche 9 bis 15, dadurch gekennzeichnet, daß das Servierbehältnis zur Kühlung mit Stickstoff umströmt wird.

17. Verfahren zur Herstellung von Fertig- bzw. Kühlfertiggerichten nach einem der Ansprüche 1 bis 8, dadurch gekennzeichnet, daß man nahezu garfertigt zubereitete Nahrungsmittel mit heißer Luft oder heißem Inertgas einer Temperatur von 100°C bis 130°C aufheizt, deren Feuchte so gewählt ist, daß ihr Wasserdampfpartialdruck dem Sättigungspartialdruck der Kondensatfeuchte bei der gewünschten Temperatur der Nahrungsmittel im Bereich von 78°C bis 90°C entspricht,
mit überhitztem Wasserdampf einer Temperatur von 103°C bis 200°C behandelt,
mit einem Inertgas unter 80°C kühlt und
mit einer Skin-Folie versiegelt.

18. Verfahren zur Herstellung von Fertig- bzw. Kühlfertiggerichten nach einem der Ansprüche 1 bis 8, dadurch gekennzeichnet, daß nahezu garfertig zubereitete Nahrungsmittel, insbesondere Teigwaren, Pasten, Pizzas und Gemüsekomponenten ohne Direktbedampfung nach dem Prinzip der sog. feuchtneutralen Aufheizung erwärmt und pasteurisiert werden, wobei die Temperatur der feuchten Inertgasatmosphäre 70°C bis 98°C, vorzugsweise ca. 95°C, beträgt und der Wasserdampfsättigungsdruck bei jeweils gleicher Temperatur oder etwas niedriger gewählt wird.

## Claims

1. An instant meal with plate or dish without partitioning compartments consisting of a material that can be heated to 220 °C having arranged thereon a pasteurized or sterilized meal hermetically sealed with a shrink foil tightly enveloping the product, characterized in that several components are substantially separated from each other by the shrink foil and that this instant meal is subjected to a moist neutral heating up prior to being pasteurized or sterilized.

2. The instant meal according to claim 1, characterized in that at least one portion of the components is positioned esthetically or in portions.

3. The instant meal according to claim 1 or 2, characterized in that the shrink foil is rolled about the edge of the plate or the dish.

4. The instant meal according to claim 1 or 2, characterized in that the upper film covering the meal is sealed with a shrink foil arranged under the plate beyond the plate.

5. The instant meal according to any of claims 1 to 4, characterized in that the oxygen content of the air remaining in the components of the meal or in the interspaces is reduced.

6. The instant meal according to any of claims 1 to 5, characterized in that the meal is storable for more than 30 days, preferably for more than 38 days, upon cold storage.

7. The instant meal according to ally of claims 1 to 6, characterized in that the shrink foil is inflated above the heated up meal ready for consumption and can be removed manually without any other means.

8. The instant meal according to any of claims 1 to 7, characterized in that the heated up meal ready for consumption possesses the flavor, smell, vitamin content and nutritive value of the fresh cooked meal.

9. A method of preparing the instant meal or cold storage instant meal of claims 1 to 8, comprised of at least two different food components, characterized in that the food articles, being in an almost well done state after conventional preparation, are positioned mechanically or manually on a serving recipient; subjected to steaming for reducing the number of germs; that, if desired, a sauce is sterilized parallel thereto; and that the food articles are sealed together with the serving recipient by using one or a plurality of shrink foils.

10. The method of claim 9, characterized in that the direct steaming is conducted at atmospheric pressure for 10 to 15 minutes with saturated steam at a temperature of about 100 °C.

11. The method of claim 9, characterized in that the direct steaming is conducted under pressure at a saturated steam temperature of from 130 °C to 135 °C for 20 minutes.

12. The method according to any of claims 9 to 11, characterized in that the product is treated with overheated water vapor at a temperature of from about 103 °C to 130 °C at the end of the direct steaming or during its stay in the steam tunnel, to avoid moisture on tile serving recipient.

13. The method according to any of claims 9 to 12, characterized in that the product is treated with a water vapor/nitrogen mixture or water vapor/air mixture heated by exposure to heat radiation or convection heat to a temperature of from 110 °C to 200 °C, preferably about 130 °C, at the end of the direct steaming.

14. The method of claim 9, characterized in that the food articles are heated up with moist air or a moist inert gas to a temperature of from about 78 °C to 90 °C, prior to the direct steaming.

15. The method of claim 14, characterized in that the hot air or the hot inert gas for the moist heating up has a temperature of from about 100 °C to 130 °C, about 115 °C in particular, the atmospheric humidity being selected in such a manner that the water vapor partial pressure in the hot air corresponds to the saturation partial pressure of the condensate moisture at the temperature to which the food article is to be heated.

16. The method according to any of claims 9 to 15, characterized in that the nitrogen is circulating the serving recipient for cooling.

17. A method for preparing the instant meals or cold storage instant meals as claimed in any of claims 1 to 8, characterized in that almost well-done food articles are heated up with hot air or hot inert gas to a temperature of from 100 °C to 130 °C, their moisture being selected in such a manner that their water vapor partial pressure corresponds to the saturation partial pressure of the condensate moisture at the desired temperature of the food article in the range of from 78 °C to 90 °C, are treated with overheated water vapor of a temperature of from 103 °C to 200 °C, are cooled with an inert gas below 80 °C, and are sealed with a shrink foil.

18. A method for preparing the instant meals or cold storage instant meals as claimed in any of claims 1 to 8, characterized in that almost well-done food articles, particular farinaceous products, pastes, pizzas and vegetable components are heated and pasteurized without direct steaming according to the principle of the so-called moist neutral heating up, the temperature of the moist inert gas atmosphere being from 70 °C to 98 °C, preferably about 95 °C, and the saturation vapor pressure being selected at the same temperature or somewhat lower.

## Revendications

1. Plat cuisiné se présentant sous forme d'assiette ou de plat sans compartiment, cette assiette ou ce plat étant composés d'une matière chauffable à 220 °C et contenant un mets pasteurisé ou stérilisé arrangé dessus, ce mets étant recouvert hermétiquement par une feuille enveloppant le produit (_{"}feuille rétractable"), caractérisé en ce que plusieurs composants sont substantiellement séparés les uns des autres par cette feuille rétractable et que ce plat cuisiné est soumis à un chauffement neutre en ce qui concerne l'humidité, avant la pasteurisation ou stérilisation.

2. Plat cuisiné selon la revendication 1, caractérisé en ce qu'une partie au moins des composants est présentée de manière esthétique ou sous forme de portions.

3. Plat cuisiné selon l'une des revendications 1 et 2, caractérisé en ce que la feuille rétractable est enroulée sur le bord de l'assiette ou du plat.

4. Plat cuisiné selon l'une des revendications 1 et 2, caractérisé en ce que la feuille supérieure recouvrant le mets est soudée à l'extérieur de l'assiette avec une feuille rétractable placée sous l'assiette.

5. Plat cuisiné selon l'une des revendications 1 à 4, caractérisé en ce que le taux d'oxygène de l'air restant dans les composants du mets ou dans les intervalles est réduit.

6. Plat cuisiné selon l'une des revendications 1 à 5, caractérisé en ce que le mets peut être conserve plus de 30 jours, de préférence plus de 38 jours, dans une conservation à froid.

7. Plat cuisiné selon l'une des revendications 1 à 6, caractérisé en ce que la feuille rétractable est gonflée sur le plat chauffé et prêt à être consommé et est enlevable à la main sans ustensile.

8. Plat cuisiné selon l'une des revendications 1 à 7, caractérisé en ce que le plat chauffé et prêt à être consommé a le goût, l'odeur, la teneur en vitamines et la valeur nutritive du plat fraîchement cuisiné.

9. Procédé de fabrication d'un plat cuisiné ou d'un plat réfrigéré à partir d'au moins deux différents composants alimentaires selon les revendications 1 à 8, caractérisé en ce que l'on dépose les aliments après une préparation conventionnelle, presque à l'état cuit, mécaniquement ou manuellement sur le récipient à servir, l'on procède à une vaporisation dans le but de réduire le nombre de germes, l'on stérilise en même temps une sauce, le cas échéant, et que l'on scelle le tout dans le récipient à servir en utilisant une ou plusieurs feuilles rétractables.

10. Procédé selon la revendication 9, caractérisé en ce que la vaporisation directe est réalisée à une pression atmosphérique pendant 10 à 15 minutes avec une vapeur saturée d'une température d'environ 100 °C.

11. Procédé selon la revendication 9, caractérisé en ce que la vaporisation directe se fait sous pression à une température de vapeur saturée située entre 130 °C et 135 °C et pendant 20 minutes.

12. Procédé selon l'une des revendications 9 à 11, caractérisé en ce que, pour éviter de l'humidité sur le récipient à servir, le produit est traité avec de la vapeur d'eau surchauffée d'une température comprise environ entre 103 °C et 130 °C, à la fin de la vaporisation directe ou dans tout le tunnel à vapeur.

13. Procédé selon l'une des revendications 9 à 12, caractérisé en ce que le produit est traité avec un mélange de vapeur d'eau et d'azote ou un mélange de vapeur d'eau et d'air chauffé par chaleur rayonnante ou par chaleur de convection à une température comprise entre 110 °C et 200 °C, de préférence à environ 130 °C, à la fin de la vaporisation directe.

14. Procédé selon la revendication 9, caractérisé en ce qu'avant la vaporisation directe, on chauffe les aliments avec de l'air humide ou un gaz inerte humide à une température comprise environ entre 78 °C et 90 °C.

15. Procédé selon la revendication 14, caractérisé en ce que l'air chaud ou le gaz inerte chaud utilisé pour le chauffement humide présente une température comprise environ entre 100 °C et 130 °C, en particulier d'environ 115 °C, l'humidité dudit gaz étant choisie de sorte que la pression partielle de la vapeur d'eau dans l'air chaud corresponde à la pression partielle de saturation de l'humidité condensée à la température à laquelle l'aliment doit être chauffé.

16. Procédé selon l'une des revendications 9 à 15, caractérisé en ce que l'on fait circuler de l'azote dans le récipient à servir pour refroidir.

17. Procédé de préparation de plats cuisinés ou de plats réfrigérés selon l'une des revendications 1 à 8, caractérisé en ce que l'on chauffe des aliments presque cuits avec de l'air chaud ou un gaz inerte chaud d'une température comprise entre 100 et 130 °C, dont l'humidité est choisie de sorte que sa pression partielle de vapeur d'eau corresponde à la pression partielle de saturation de l'humidité condensée à la température souhaitée des aliments dans une fourchette située entre 78 °C et 90 °C, on les traite avec de la vapeur d'eau surchauffée d'une température comprise entre 103 °C et 200 °C, on les refroidit avec un gaz inerte à moins de 80 °C et on scelle avec une feuille rétractable.

18. Procédé de préparation de plats cuisinés ou de plats réfrigérés selon l'une des revendications 1 à 8, caractérisé en ce que l'on chauffe et pasteurise des aliments presque cuits, en particulier les produits farineux, les pâtes, les pizzas, les légumes, sans vaporisation directe selon le principe dudit chauffement neutre en ce qui concerne l'humidité, la température de l'atmosphère de gaz inerte humide étant située entre 70 °C et 98 °C, de préférence à environ 95 °C, et la pression de saturation de la vapeur d'eau étant choisie respectivement à la même température ou un peu plus bas.
